(19) **Europäisches Patentamt / European Patent Office / Office européen des brevets**

(11) **EP 1 772 483 A1**

(12) **EUROPEAN PATENT APPLICATION**
published in accordance with Art. 158(3) EPC

(43) Date of publication:
**11.04.2007 Bulletin 2007/15**

(21) Application number: **05766150.6**

(22) Date of filing: **22.07.2005**

(51) Int Cl.:
*C08L 5/00* (2006.01)    *A23D 7/015* (2006.01)
*A23L 1/05* (2006.01)    *A23L 1/24* (2006.01)
*A23L 1/307* (2006.01)    *A23L 1/31* (2006.01)
*C09K 3/00* (2006.01)

(86) International application number:
**PCT/JP2005/013510**

(87) International publication number:
**WO 2006/009259 (26.01.2006 Gazette 2006/04)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.07.2004 JP 2004215742**

(71) Applicants:
- **SAN-EI GEN F.F.I., INC.**
  **Toyonaka-shi,**
  **Osaka 561-8588 (JP)**
- **Phillips Hydrocolloids Research Limited**
  **London W1S 4AQ (GB)**

(72) Inventors:
- **KATAYAMA, Tsuyoshi,**
  **c/o SAN-EI GEN F.F.I., INC.**
  **Toyonaka-shi, Osaka 5618588 (JP)**

- **OGASAWARA, Takeshi,**
  **c/o SAN-EI GEN F.F.I., INC.**
  **Toyonaka-shi, Osaka 5618588 (JP)**
- **SASAKI, Yasushi,**
  **c/o SAN-EI GEN F.F.I., INC.**
  **Toyonaka-shi, Osaka 5618588 (JP)**
- **AL-ASSAF, Saphwan**
  **Wrexham, LL11 2BW (GB)**
- **PHILLIPS, Glyn O.,**
  **Philips Hydrocolloids Res. Ltd**
  **London W1S 4AQ (GB)**

(74) Representative: **Müller-Boré & Partner**
**Patentanwälte**
**Grafinger Strasse 2**
**81671 München (DE)**

(54) **COMPOSITION CONTAINING HYDROGEL COMPONENT DERIVED FROM ARABIAN GUM**

(57)    An object of the present invention is to provide a novel foodstuff useful as an alternative for edible fats and/or oils, an alternative for edible fats and/or oils using the foodstuff, and food products prepared by using these alternatives for fats and/or oils; a novel material usable as a water absorbent material and/or a water retention material; a water absorbent material and a water retention material produced by using such a material; and a water absorbent product and a water retention product produced by using the material.

A composition containing a hydrogel component derived from gum-arabic, comprising at least 10 wt% of hydrogel component preferably obtained by heating gum arabic, is used as the alternative for edible oil, alternative for edible fats, water absorbent material, or water retention material.

**Description**

TECHNICAL FIELD

The present invention relates to a composition containing a hydrogel component derived from gum arabic. The present invention also relates to the use of the composition containing the hydrogel component in food and other products, in particular, as an alternative for edible fats and/or oils in food products, and use as a water retention or water absorbent material.

BACKGROUND OF THE INVENTION

Gum arabic is a natural resin prepared by drying the rubbery exudate from the trunks and branches of plants that belong to the genus *Acacia* of the Leguminasae family, in particular, *Acacia senegal* and *Acacia seyal.* Gum arabic is highly soluble in water and its aqueous solutions have high emulsion stabilities, protective colloidabilities, and film-forming abilities even at low concentrations, and therefore have been widely used as emulsifiers, thickeners, stabilizers, binders, and coating agents ("Industrial Gums, Polysaccharides and their Derivatives", second edition, Academic Press, New York and London, 1973, pp 197-263). Gum arabic has been used for many years in various fields, including the field of food products in the form of an emulsifier, thickener, emulsion stabilizer, etc. Therefore, its safety when used as a foodstuff is empirically confirmed.

In recent years, because of the Westernization of Japan's food culture, seasonings and foodstuffs which contain much oil and fat, such as mayonnaise, salad dressings, and margarine have become indispensable in the Japanese diet. However, as lifestyle-induced diseases such as obesity, hyperlipemia, diabetes, and high blood pressure increase, consumers are becoming more conscious of their health, and there is an increased demand for reducing the amount of fat and calorific content intaken. Therefore, there is a demand for reducing the amount of lipids in the above-mentioned oil or fat-containing food products by using materials that can replace fats and/or oils (alternatives for fats and/or oils) in order to reduce calorific content intaken. Such alternatives for fats and/or oils are expected to not only reduce the amount of lipids and calorific content intaken but also to have the smoothness to the tongue that is peculiar to fat and oil-containing food products without losing the natural body thereof.

Considerable research has been conducted in pursuit of such alternatives for fats and/or oils. For example, low-temperature expandable granular starch is proposed as an alternative for fats and/or oils (e.g., Patent Document 1); microscopic starch particles, having an average particle diameter of no more than 250 $\mu$m, and surface hydrophobicity of no more than 35 g as expressed by oil absorbency measurement according to JIS K6223, are proposed as alternatives for edible fats and/or oils (e.g., Patent Document 2); and starch processed with a moist-heat treatment is proposed as an alternative for edible fats and/or oils (e.g., Patent Document 3), etc.

In recent years, macromolecular materials called water-absorbing polymers have been used in sanitary materials for absorbing urine, blood, body fluids, etc., such as in disposable diapers and sanitary napkins. In addition to sanitary materials, water-absorbing polymers are widely used as dehumidification materials, water retention materials for soil, food products, medicinal materials, etc., utilizing their water absorption, moisture absorption, and water retention properties. Most of these water-absorbing polymers are macromolecular materials which are synthesized or cross-linked by an artificial method wherein the molecules become entangled with one another. They have extremely high water absorptivity and water retention properties, so they do not suffer from syneresis even when pressurized, but they are non-biodegradable and it is known that their absorptivity for solutions with a high salt concentration is low. Patent Documents 4 to 6 propose examples of biodegradable water absorptive materials, such as high water-absorbing polymers, water-swellable polymers, and desiccants having excellent salt-resistance stability; however, they also have drawbacks, such as the raw materials used are expensive, their water absorptivity is insufficient, etc.

[Patent Document 1] Japanese Unexamined Patent Publication No. 1993-252906
[Patent Document 2] Japanese Unexamined Patent Publication No. 2001-218550
[Patent Document 3] Japanese Unexamined Patent Publication No. 1994-141820
[Patent Document 4] Japanese Unexamined Patent Publication No. 1985-031511
[Patent Document 5] Japanese Unexamined Patent Publication No. 1981-076419
[Patent Document 6] Japanese Unexamined Patent Publication No. 1981-005137

SUMMARY OF THE INVENTION

[Problem to Be Solved by the Invention]

An object of the present invention is to provide novel foodstuffs useful as alternatives for edible fats and/or oils in response to the increased above-mentioned social demands. Another object of the present invention is to provide alternatives for edible fats and/or oils prepared by using the foodstuffs, and food products prepared by using the alternatives for edible fats and/or oils.

Still another object of the present invention is to provide the use of a composition containing a hydrogel component obtained by processing gum arabic for purposes other than as the above-mentioned foodstuffs, specifically, water retention materials that utilize its high water-holding capacity, and water absorbent materials that utilize its high water absorptivity.

[Means for Solving the Problems]

The present inventors conducted extensive research to solve the above problems and found that compositions containing a hydrogel component obtained by processing gum arabic are useful as foodstuffs for the above-described purposes. Furthermore, mayonnaise prepared using such foodstuffs as an alternative for oil has a freeze resistance that cannot be attained by conventional mayonnaise, and is therefore usable for frozen foods.

Furthermore, the present inventors found that the above composition containing a hydrogel component has a higher water-holding capacity and/or water absorptivity as the content of the hydrogel component increases, and that the composition is usable for a water retention and/or water absorbent material.

The present invention has been completed based on such findings and comprises the following embodiments:

Item 1. A composition containing a hydrogel component derived from gum arabic, the composition containing at least 10 wt% of the hydrogel component.

Item 2. A composition containing the hydrogel component according to Item 1, wherein the composition is obtained by heating gum arabic.

Item 3. A composition containing the hydrogel component according to Item 1, wherein the composition contains 10 to 80 wt% of the hydrogel component.

Item 4. An alternative for edible oil comprising the composition containing the hydrogel component of Item 3 and water.

Item 5. A food product containing the alternative for edible oil of Item 4.

Item 6. A food product according to Item 5, which is a low-calorific content food product prepared by using the alternative for edible oil of Item 4 instead of all or a part of an edible oil ordinarily used in preparing a food product containing edible oil as an ingredient.

Item 7. A food product according to Item 6, wherein the food product containing an edible oil is selected from mayonnaise, salad dressing, tartar sauce, white sauce, demi-glace sauce, curry, stew, corn soup, potage, and clam chowder.

Item 8. Use of the composition containing the hydrogel component of Item 3 and water for preparing an alternative for edible oil.

Item 9. A method for preparing a low-calorific content food product using the alternative for edible oil of Item 4 instead of all or a part of an edible oil ordinarily used in preparing a food product containing an edible oil as an ingredient.

Item 10. A composition containing the hydrogel component according to Item 1, wherein the composition contains 40-90 wt% of the hydrogel component.

Item 11. An alternative for edible fat containing the composition containing the hydrogel component of Item 10 and water.

Item 12. A food product containing the alternative for edible fat of Item 11.

Item 13. A low-calorific content food product according to Item 12, which is prepared by using the alternative for edible oil of Item 11 instead of all or a part of an edible fat ordinarily used in preparing a food product containing an edible fat as an ingredient.

Item 14. A food product according to Item 13, wherein the food product ordinarily containing an edible fat as an ingredient is selected from ice cream, soft ice cream, margarine, butter, ham, sausage, hamburg steak, meatball, whipped cream, cheese, coffee whitener, white sauce, demi-glace sauce, curry, stew, corn soup, potage, and clam chowder.

Item 15. Use of the composition containing the hydrogel component of Item 11 and water for preparing an alternative for edible fat.

Item 16. A method for preparing a low-calorific content food product using the alternative for edible fat of Item 11 instead of all or a part of an edible fat ordinarily used in preparing a food product containing an edible fat as an ingredient.

Item 17. A composition containing the hydrogel component according to Item 1, wherein the composition contains at least 20 wt% of the hydrogel component.

Item 18. A water retention material, the material consisting of the composition containing the hydrogel component of Item 17 or comprising said composition and water.

Item 19. A water retention product containing the water retention material of Item 18.

Item 20. A composition containing the hydrogel component according to Item 1, wherein the composition contains at least 75 wt% of the hydrogel component.

Item 21. A water absorbent material comprising the composition containing the hydrogel component of Item 20 as an active ingredient.

Item 22. A water absorbent product comprising the water absorbent material of Item 21.

[Effects of the Invention]

According to the present invention, a composition containing a hydrogel component prepared by using gum arabic as a raw material can be used as an alternative for edible fats and/or oils. Specifically, compositions containing the hydrogel component can be used as alternatives for edible fats and/or oils without damaging the properties of food products. Therefore, the present invention provides alternatives for edible fats and/or oils that can be used instead of fats and/or oils without losing the natural body and melt-in-the-mouth feeling (smooth texture) that food products inherently posse by containing oils and/or fats. Furthermore, because the composition containing the hydrogel component of the present invention has only about 1/9th calorific content of ordinary fats and/or oils, it can be used for preparing low-calorific content food products without adversely affecting the quality, properties and texture of the food products.

By employing the technical features of the present invention, a composition containing a hydrogel component that is prepared by using gum arabic as a raw material can be used as a water absorbent or water retention material. Compositions containing the hydrogel component (water absorbent or water retention material) can be used, as alternatives for conventional water absorbent polymers, in the production of water absorbent or water retention products. Because the composition containing the hydrogel component of the present invention is very safe and edible, it can be widely used in production of water absorbent and water retention products in various fields including medical fields, food product fields, and cosmetic and toiletry product fields.

BRIEF DESCRIPTION OF THE DRAWINGS

Fig. 1 is a graph showing the change in content of hydrogel component (wt%) and water retention ability (times) with heating (120°C) time observed for heated gum arabic (Experimental Example 1).

Fig. 2 shows the structure of the disposable diaper prepared in Example 4.

BEST MODE FOR CARRYING OUT THE INVENTION

The present invention is explained in detail below.

(1) Composition containing a hydrogel component

The present invention relates to a composition containing a hydrogel component prepared by using gum arabic as a raw material. The composition containing the hydrogel component contains at least 10 wt% of hydrogel component.

Here, the hydrogel component contained in the composition is a water-insoluble component derived from gum arabic. The hydrogel component in the present specification is a material that forms a hydrogel in the presence of water by absorbing water, and therefore it does not have hydrogel properties in itself. The content of hydrogel component in the composition can be determined by the following steps:

<Content of hydrogel component>

(1) Drying the composition containing the hydrogel component in a thermostatic chamber at 50 °C over 24 hours.

(2) If the dried composition containing the hydrogel component is not powder, forming it into powder by pulverization.

(3) Placing 1.0 g (weight a) of the dried powder composition containing the hydrogel component in a beaker, adding 1000 g of ion-exchanged water, well mixing them at room temperature (25 °C), and allowing the mixture to stand at room temperature (25 °C) for 16 hours.

(4) Filtering the resultant mixture using 300-mesh wire gauze, and when water stops flowing through the wire gauze, collecting the filtration residue left on the wire gauze into a round bottom flask.

(5) Measuring the mass (weight b) of the filtration residue.

(6) Adding 200 ml of methanol to the resultant filtration residue for immersion at room temperature (25 °C) for 1 hour to precipitate insoluble matter.

(7) Removing the supernatant liquid by decantation and drying the precipitate under reduced pressure using a rotating evaporator.

(8) Measuring the weight (weight c) of the obtained dry filtration residue (i.e., dried the precipitate), and then calculating the content of the hydrogel component using the formula below.

[Formula 1]

Content (wt%) of hydrogel component = [Dry weight of filtration residue (Weight c) / Dry weight of composition containing hydrogel component (Weight a)] x 100

The content (wt%) of the hydrogel component in the composition containing the hydrogel component is not limited as long as it is not less than 10 wt% as described above, and can be suitably selected depending on the use of the composition containing the hydrogel component.

For example, when the composition containing the hydrogel component is used as an alternative for edible oils as described later, it is preferable that the content of the hydrogel component is 10 to 80 wt%, and more preferably, 25 to 70 wt%. When the composition containing the hydrogel component is used as an alternative for edible fats as described later, it is preferable that the content of the hydrogel component is 40 to 90 wt%, and more preferably, 60 to 80 wt%.

When the composition containing the hydrogel component is used as a water retention material as described later, it is preferable that the content of the hydrogel component is at least 20 wt%, and more preferably, 25 to 75 wt%. When the composition containing the hydrogel component is used as a water absorbent material as described later, it is preferable that the content of the hydrogel component is at least 75 wt%, and more preferably, 85 to 95 wt%.

The composition containing the hydrogel component (hydrogel component-containing composition) can be prepared by using gum arabic as a raw material. As long as the content of hydrogel component is not less than 10 wt%, the preparation method thereof is not limited, but can readily be prepared by, for example, heating gum arabic. Gum arabic used as a raw material (unmodified gum arabic) is a natural exudate from the trunks and branches of *Acacia senegal* or *Acacia seyal* of the genus Acacia, family Leguminasae, or any other plants belonging to the same genus.

Usually, gum arabic (raw material) is produced in North Africa from Ethiopia to Senegal, West African countries (e.g., Ethiopia, Sudan, Senegal, Nigeria, Niger, Ghana), East African countries (e.g., Kenya, Uganda, etc.), the Sahara district, and the basins of the tributaries of the River Nile, and gum arabic (raw material) produced in any areas can be employed in the present invention regardless of origin.

The moisture content of gum arabic (raw material) is not limited. The gum arabic (raw material) that is usually available from commercial sources shows a reduction in moisture content when dried by heating at 105°C for 6 hours (loss on drying) of not over 20 wt%, preferably 5 to 15 wt%. However, gum arabic having a loss on drying of less than 5 wt% can be readily obtained by heat drying commercially available gum arabic. Therefore, in the present invention, any gum arabic (raw material) having such a moisture content (loss on drying) can be suitably selected regardless of its moisture content.

Moreover, while gum arabic (raw material) is usually procured in such forms as blocks, beads, crude pulverizates, granules, and powders (including spray-dried powders), any form can be used as raw material gum arabic to be processed in the present invention. Further processing may be applied, such as purification treatment, desalting treatment, pulverization, or spray-drying, etc.

From the viewpoint of heating efficiency, it is desirable that gum arabic has the form of a crude pulverizate, granular, grainy particles or powder. There is no upper limitation on the average particle diameter; however, from the viewpoint of heating efficiency, it is generally not greater than 100 mm, and preferably no more than 10 mm. A spray-dried powder having an average particle diameter of about several tens to about several hundred $\mu$m is particularly preferably.

There are no limitations to the methods for heating such gum arabic (raw material) as long as they generate the hydrogel component in such a manner that its content in the composition is not less than 10 wt%, and preferably 10 to 95 wt%. However, this may depend on the type of gum arabic (raw material) and its origin, when gum arabic belongs to the *A. senegal* species, for example, the gum arabic may be heated using an oven (thermostat) or heated under low pressure conditions. Specifically, when the gum arabic is heated using an oven (thermostat), for example, at 120 °C, the heating time is generally not less than 20 hours, and preferably not less than 22 hours. The content of the hydrogel component in the gum arabic tends to increase as the heating time increases. Therefore, the heating time can be suitably selected and adjusted so that the content (wt%) of the hydrogel component contained in the gum arabic is as desired.

In order to prevent a gum arabic sample from caking, clustering or aggregating during heating, it is preferable that the gum arabic sample be heated under low pressure conditions. Heat-treatment under low pressure can be conducted by applying heat to a closed container equipped with a low pressure line leading to a water-jet pump or a vacuum pump while agitating the gum arabic sample under low pressure. Such treatment may be conducted by rotating a rotary evaporator under low pressure by a simple method; decompression dryers and vacuum dryers are examples of industrially available equipment. In such equipment, the contents can be homogeneously mixed using a screw etc., while reducing the pressure in the container using a water jet pump, a vacuum pump, etc. Furthermore, since such equipment may be provided with a device that can heat the contents by introducing steam into jacket disposed outside the container, drying (moisture removal), mixing, and heating can be performed at the same time, and therefore such equipment is suitable for production of the hydrogel containing composition of the present invention. Furthermore, such equipment can promptly cool the contents, after the completion of heating, by agitating the contents while letting cooling water flow into a jacket disposed outside the container. Specific examples of such equipment include Ribocone (cone-shaped ribbon vacuum dryer (RM-VD): product of Okawara Mfg. Co., Ltd.), vacuum Nauta mixer NXV (product of Hosokawamicron Corporation), planetary cone-shape mixing dryer SV mixer (product of Shinko Pantec Co., Ltd.), etc.

Heating conditions are not limited to those described above as long as the hydrogel component-containing composition of the present invention can be obtained, and heating temperature, heating time, heating method, and heating environment conditions (relative humidity, whether or not a closed system is used, etc.) may be suitably selected. The effects of the invention obtained by the above method can also be obtained by heating the gum arabic at a temperature lower than 120 °C for a longer time or heating the gum arabic at a temperature higher than 120 °C for a shorter time. For example, when the heating temperature is 110 °C, the heating time is generally not shorter than 72 hours, and preferably longer. When the heating temperature is 130 °C, the heating time is generally not shorter than 8 hours, and preferably longer. Heating in absence of oxygen, such as under nitrogen-replacement conditions, is preferable, because coloring of the resultant composition containing the hydrogel component can be prevented.

The thus-obtained composition containing the hydrogel component of the present invention is edible like gum arabic and can be used as a material for alternatives for edible fats and/or oils (may be referred to as a material for alternatives for edible or oils).

(2) Alternatives for edible fats and/or oils, and food products using the same

The present invention provides a use of the composition containing a hydrogel component as an alternative for edible fats and/or oils.

Here, "alternative for edible fats and/or oils" includes both "alternative for edible oils" and "alternative for edible fats". Alternative for edible fats and/or oils (alternatives for edible oils and alternatives for edible fats) are alternatives for substituting all or a part of the fats and/or oils ordinarily used in food products without significantly impairing the quality and properties (including texture) inherently possessed by the food products (particularly, processed foods). The fats and/or oils may be vegetable and animal fats and/or oils.

Although there are no clear definitions, oils are usually liquid at ordinary temperatures (for example, at 20 °C). Examples of oils include soybean oil, salad oil, olive oil, corn oil, sesame oil, rapeseed oil, cottonseed oil, safflower oil, sunflower seed oil, wheat-germ oil, evening primrose oil, castor oil, arachis oil, palm oil and like vegetable oils; orange roughy oil, sardine oil, whale oil and like fish oils; and DHA (docosahexaenoic acid), EPA (eicosapentaenoic acid) and like unsaturated fatty acids obtained from fish oils.

Fats are solid or semi-solid lipids at ordinary temperature (20 °C). Examples of animal fats include beef tallow, lard, mutton tallow, milk fat, etc. Examples of vegetable fats include, cocoa butter, palm oil, coconut oil, etc. Hardened (hydrogenated) liquid oils made into a solid state or semi-solid state are also examples of fats.

By using the composition containing the hydrogel component of the present invention together with water, as an alternative for fats and/or oils instead of all or a part of the fats and/or oils contained in a processed food, it is possible to reproduce the textures (body feeling, melt-in-the-mouth feeling, smoothness, etc.) that can inherently be obtained by adding fats and/or oils, without significantly impairing the natural qualities and properties of the processed food. Furthermore, gum arabic has a calorific content of 1 kcal/g, which is about 1/9th that of oils (see the calorific content of dietary fiber, in the "Nutrition Labeling Standard" by the Japan Ministry of Health, Labor and Welfare, modified on February 17, 2003). Therefore, the present invention can remarkably reduce calorific contents intaken without significantly impairing the properties and textures of food products by using a composition containing a hydrogel component derived from gum arabic instead of fats and/or oils.

The composition containing the hydrogel component of the present invention can be used as alternatives for fats and/or oils when used together with water. There are no limitations to the methods (pretreatment methods) for making the composition containing the hydrogel component of the present invention into an alternative for edible fats and/or oils, but it is preferable that the composition containing the hydrogel component is dissolved or dispersed in water to make it swell before use, because the composition containing the hydrogel component swells only in the presence of water. It is also possible to premix the composition containing the hydrogel component with other powders and/or solids used as ingredients of a food product, and then dissolve or disperse the mixture in water to make the composition containing the hydrogel component swell. It is also possible to make the composition containing the hydrogel component swell by directly adding it to a foodstuff that contains water so as to absorb water in the food product. There are no limitations to the conditions of mixing the composition containing the hydrogel component of the present invention with water, and alternatives for edible fats and/or oils can be obtained by mixing these two components regardless of the temperature.

Among the compositions containing a hydrogel component of the present invention, those having a hydrogel component content of 10 to 80 wt%, and preferably 25 to 70 wt%, can be suitably used as an alternative for edible oils. Examples of edible oils substituted include soybean oil, olive oil, corn oil, sesame oil, rapeseed oil, cotton seed oil, safflower oil, sunflower seed oil, wheat-germ oil, evening primrose oil, castor oil, arachis oil, palm oil and like vegetable oils; and animal oils, such as orange roughy oil, sardine oil, whale oil and like fish oils, and DHA (docosahexaenoic acid), EPA (eicosapentaenoic acid) and like unsaturated fatty acids obtained from fish oils.

Among the compositions containing a hydrogel component of the present invention, those having a hydrogel component content of 40 to 90 wt%, and preferably 60 to 80 wt%, can be suitably used as an alternative for edible fats. Examples of edible fats to be substituted include, as described above, beef tallow, lard, mutton tallow, milk fat and like animal fats; cocoa butter, palm oil, coconut oil and like vegetable fats; and hardened (hydrogenated) liquid oils.

The present invention provides food products, in particular processed foods, prepared by using such alternatives for edible fats and/or oils (alternatives for edible oils and alternatives for edible fats).

There are no limitations to such food products as long as they are ordinarily prepared by using edible fats and/or oils as ingredients thereof. There are no limitations to the food products prepared by using edible oils as a material, but examples thereof include food products ordinarily use soybean oil, salad oil, olive oil, corn oil, sesame oil, rapeseed oil, cotton seed oil, safflower oil, sunflower seed oil, wheat-germ oil, evening primrose oil, castor oil, arachis oil, palm oil and like vegetable oils; orange roughy oil, sardine oil, whale oil and like fish oils; and unsaturated fatty acids such as DHA (docosahexaenoic acid) and EPA (eicosapentaenoic acid) derived from fish oils. Examples of the food products also include aqueous emulsified food products prepared by emulsifying the above-mentioned oils using an emulsifier, etc., to form oil-in-water (O/W type) or water-in-oil-in-water (W/O/W type) emulsions. There are no limitations to the types of the food products prepared by using such edible oils, and example thereof include mayonnaise, dressing, tartar sauce, white sauce, demi-glace sauce, curry, stew, corn soup, potage, clam chowder, etc. Preferable examples are salad dressings, mayonnaises and like dressings and sauces ordinarily contain oils.

There are no limitations to the food products prepared by using edible fats, and examples thereof include food products ordinarily using at least one member selected from the group consisting of beef tallow, lard, mutton tallow, milk fat and like animal fats; cocoa butter, palm oil, coconut oil and like vegetable fats as ingredients of food products; and food products obtained by emulsifying the above-mentioned fats. There are no limitations to the types of the food products prepared by using such edible fats, and examples thereof include ice cream, soft ice cream, margarine, butter, ham, sausage, hamburg steak, meatball, whipped cream, cheese, coffee whitener, white sauce, demi-glace sauce, curry, stew, corn soup, potage, clam chowder, etc. Preferable examples include ice cream, margarine, etc.

Such food products of the present invention can be prepared by using materials and methods for preparing ordinary food products except that the composition containing the hydrogel component is used, with containing water, instead of all or a part of the fats and/or oils ordinary contained in these food products.

There are no limitations to the methods for preparing such food products, and examples thereof include methods wherein fats and/or oils are added to an aqueous solution containing the composition containing the hydrogel component of the present invention, and the mixture is then homogenized using a homogenizer or the like emulsifier; and methods wherein an aqueous solution containing the composition containing the hydrogel component of the present invention is homogenized using a homogenizer or the like emulsifier, and then fats and/or oils are added thereto. Specifically, an example of method for preparing mayonnaise or like oil-in-water (O/W) emulsion is such that the composition containing the hydrogel component is dissolved or dispersed in water; salad oil or the like vegetable oil is added dropwise and mixed while agitating; and then the resultant mixture is emulsified using a homogenizer, homomixer or the like emulsifier. An example of a method for preparing a margarine, shortening or like water-in-oil (W/O) emulsion is such that, after mixing fat(s) with an emulsifier, a solution obtained by dissolving the composition containing the hydrogel component in water is added to the mixture together with salt and skim milk powder, and the resultant mixture is then emulsified using a homogenizer, homomixer or like emulsifier.

The content of the composition containing the hydrogel component cannot be defined by a single range because it varies depending on the type of food product, and types and amounts of substituted fat(s) and/or oil(s). Regardless whether all or a part of the fats and/or oils are substituted, the content of the composition containing the hydrogel component in 100 parts by weight of the alternative for edible fats and/or oils of the present invention that is used instead of 100 parts by weight of fats and/or oils is generally 1 to 50 parts by weight, and can suitably be selected within this range. The content of the composition containing the hydrogel component is preferably 2 to 40 parts by weight, and more preferably 4 to 20 parts by weight.

The amount of the composition containing the hydrogel component added to a food product cannot be generalized and varies depending on the usage of the food product and types and amounts of the fats and/or oils in the food product; however, when the food product is mayonnaise, which is an edible oil-containing food product, the content of the composition containing the hydrogel component in 100 parts by weight of mayonnaise may be generally 0.1 to 30 parts by weight, preferably 0.3 to 20 parts by weight, and more preferably 0.5 to 10 parts by weight, in a case that a composition containing the hydrogel component in a ratio of generally 10 to 80 wt% and preferably 25 to 75 wt% is used.

When the food product is a dressing, which is an edible oil-containing food product, the content of the composition containing the hydrogel component per 100 parts by weight of dressing may be generally 0.1 to 20 parts by weight, preferably 0.2 to 10 parts by weight, and more preferably 0.3 to 5 parts by weight, if the composition containing the hydrogel component defined above is used.

When the food product is a white sauce, which is one of edible oil-containing food products, the content of the composition containing the hydrogel component per 100 parts by weight of white sauce may be generally 0.1 to 20 parts by weight, preferably 0.2 to 15 parts by weight, and more preferably 0.3 to 10 parts by weight, if the above specified composition containing the hydrogel component is used.

When the food product is an ice cream, which is an edible oil-containing food product, the content of the composition containing the hydrogel component per 100 parts by weight of ice cream may be generally 0.01 to 10 parts by weight, preferably 0.05 to 5 parts by weight, and more preferably 0.1 to 3 parts by weight, in a case that a composition containing the hydrogel component in a ratio of generally 40 to 90 wt% and preferably 60 to 80 wt% is used.

When the food product is a margarine, which is an edible fat-containing food product, the content of the composition containing the hydrogel component per 100 parts by weight of margarine may be generally 0.1 to 30 parts by weight, preferably 0.3 to 20 parts by weight, and more preferably 0.5 to 10 parts by weight, if the above specified composition containing the hydrogel component is used.

When the food product is a sausage, which is an edible fat-containing food product, the content of the composition containing the hydrogel component per 100 parts by weight of sausage may be generally 0.1 to 15 parts by weight, preferably 0.2 to 10 parts by weight, and more preferably 0.3 to 5 parts by weight, if the above specified composition containing the hydrogel component is used.

(3) Water absorbent or water retention materials, and products using the same

A composition containing the hydrogel component of the present invention, in particular a composition whose hydrogel component is not less than 20 wt%, has high water absorptivity, and the composition containing hydrogel component that has absorbed water (i.e., hydrogel) has a high moisture retentivity. In other words, the composition containing the hydrogel component of the present invention can be used as a water absorbent material when it is dry and as a water retention material when it has absorbed and retains water. Therefore, the present invention provides a use of the composition containing the hydrogel component as a water absorbent or water retention material. Note that the "water retention material" in the present invention includes not only that has already absorbed water and retains the water but also that, even if it is dry, can absorb and retain water when used.

A composition containing the hydrogel component whose content of the hydrogel component is not less than 20 wt%, preferably 25 to 75 wt% has a high **water retention ability** (swelling ratio) and has excellent water retentive effects when it has absorbed water, but its water-absorption speed is not very fast. Therefore, a composition containing the hydrogel component that has such a content of the hydrogel component is suitably used as a water retention material.

For example, as shown in Experimental Example 1 (described later), which uses a composition containing a hydrogel component using gum arabic belonging to the _A. senegal_ species as a raw material, a composition containing the hydrogel component in the above ratio has a water retention ability not less than 5 times (by weight), preferably not less than 10 times, and more preferably not less than 30 times when the weight of the dry composition containing the hydrogel component is defined as 1.

The water retention ability of a composition containing the hydrogel component can be evaluated by the following formula using the weight of the composition containing the hydrogel component (1.0 g (weight a)) and the mass of the filtration residue (weight b) obtained by the formula explained under the item <Content of hydrogel component> in (1) Composition containing a hydrogel component.

**[Formula 2]**

Water retention ability of the composition containing the hydrogel component (times) =

[Weight of the filtration residue (weight b) - Weight of the dry composition containing the hydrogel component (weight a)]/ Weight of the dry composition containing the hydrogel component (weight a)

In contrast, a composition containing the hydrogel component whose content of the hydrogel component is not less than 75 wt%, and preferably 85 wt% to 95 wt% exhibits slightly decreased **water retention ability** (swelling ratio) when it has absorbed water and lower water retentive effect compared to a composition containing the hydrogel component whose content of the hydrogel component is as described above; however, its water-absorption speed is extremely fast and therefore it can quickly absorb water. Therefore, a composition containing the hydrogel component having such a content of the hydrogel component can be suitably used as a water absorbent material.

There is no limitation to the form of the composition containing the hydrogel component used as a water retention or water absorbent material, and the composition may have a form of blocks, beads, crude pulverizates, granules, grainy particles and powders (including spray-dried powders) obtained by heating the raw material gum arabic without modification. From the viewpoint of water absorption efficiency, having a larger surface area is preferable, and therefore it is preferable that the composition has the form of a crude pulverizate, granules, grainy particles, or powder.

The present invention provides water absorbent products using the composition containing the hydrogel component as water absorbent materials, or water retention products using the composition containing the hydrogel component as a water retention material, wherein high water absorptivity and water retentivity of the composition containing the hydrogel component of the present invention is utilized.

There are no limitations to such water absorbent and water retention products, and examples thereof include a wide variety of products wherein known water-absorbing polymers are used as water absorbent or water retention materials. Specific examples of usable water-absorbing polymers include starch-acrylonitrile graft polymerization hydrolysis products, starch-acrylic acid graft polymerization products, starch-styrenesulfonic acid graft polymerization products, starch-acrylamide graft polymerization products and like starch-based polymers: cellulose-acrylonitrile graft polymerization products, cellulose-styrenesulfonic acid graft polymerization products, cross-linked carboxymethyl cellulose and like cellulose-based polymers; hyaluronic acid, agarose and like other polysaccharide-based polymers; collagen and like protein-based polymers; polyvinyl alcohol cross-linked polymers, PVA water absorption gel freeze/defreeze elastomers and like polyvinyl alcohol-based polymers; sodium polyacrylate cross-linked substances, sodium acrylate-vinyl alcohol copolymers (saponified methyl acrylate vinyl acetate copolymers), saponified polyacrylonitrile-based polymers, hydroxyethyl methacrylate polymers and like acrylate-based polymers; maleic-anhydride-based (co)polymers, vinylpyrrolidone-based (co)polymers and like addition polymer-based polymers: polyethylene glycol diacrylate cross-linked polymers and like polyether-based polymers; ester-based polymers, amide-based polymers and like condensed-type polymers, etc.

For example, in the medical field, such products include preparations for controlling release of active ingredients (including sustained release preparations), wound dressings, fever reduction sheets, poultices, etc. In the agricultural/gardening fields, soil-water retention materials, seed coating materials, plant cultivation water retention materials, water absorptive sponges, seedling raising mats, etc., are included. In the food product fields, food freshness-maintenance packaging materials, contact dehydrating sheets, containers for instant noodles, double bottom instant-noodle containers with a compartment for left-over soup, etc., are included. In the cosmetic and toiletries fields, disposable diaper, makeup and cosmetic humectants, sanitary napkins, and other water absorption sheets; water absorptive sandbags, thermal storage media, refrigerants, pen inserts, etc., are included.

Such water absorbent and water retention products can be readily produced by anybody by using the composition containing the hydrogel component of the present invention as a water absorbent or water retention material instead of all or a part of a known water-absorbing polymer. Examples of production methods therefore can be found in "Collection of ideas for development and application of highly water-absorbing polymers", Takao FUSHIMI, Kogyo Chosakai Publishing Co., Ltd., 1990, which discloses water absorbent and water retention products using water-absorbing polymers and production techniques thereof, and the patent publications disclosed in the book.

Deserving special note in terms of the water absorptivity and retentivity of the composition containing the hydrogel component of the present invention is that the composition can absorb even an aqueous solution having a high content of salt just the same as water. Among the above-mentioned water-absorbing polymers, some polymers can absorb several hundreds times their own weight of water, but it is known that the water absorptivity thereof significantly decreases if the aqueous solution contains a high content of salt.

Therefore, composition containing the hydrogel component of the present invention can suitably be used as water absorbent or water retention materials for water absorbent or water retention products that are required to absorb an aqueous solution having a high content of salt. Examples of such water absorbent or water retention products include disposable diapers, sanitary napkins, sweat pads, pads for urinary incontinence, portable toilets, pet toilets, first-aid adhesive tapes, etc.

EXAMPLES

The present invention is explained below with reference to Experimental Examples, Examples and Comparative Examples. However, the scope of the present invention is not limited to these. Note that in the formulae, "parts" indicates "parts by weight" and "%" indicates "wt%" unless otherwise specified.

Experimental Example 1

A spray-dried powder (having an average particle diameter 80 $\mu$m, 500 g) prepared by spray drying an aqueous gum arabic (*Acacia senegal*) solution was placed in a container, and heated in an oven at 120 °C for a certain time (12 to 240 hours) while the lid of the container was open. The spray-dried powder was then freeze-dried.

Subsequently, 1.0 g (weight a) of one of each of the dried gum arabic samples (heated sample) and a raw material gum arabic sample (unheated sample) were weighed, 1000 g of ion-exchanged water was added thereto and well mixed at room temperature (25 °C), and the mixture was then allowed to stand at room temperature (25 °C) over a night (16 hours). The resultant mixture was subjected to filtration using 300-mesh wire gauze to remove water-soluble components, and the mass of the filtration residue left on the wire gauze (mass b) was measured after water stopped flowing through the wire gauze. The water retention ability was obtained by the following formula.

**[Formula 3]**

**Water retention ability (times) =**

**[Weight of the filtration residue (weight b) - Dry weight of the gum arabic (weight a)]/ Dry weight of gum arabic (weight a)**

The filtration residue was collected in a round bottom flask, and 200 ml of methanol was added thereto. The filtration residue was immersed in the methanol at room temperature (25 °C) for 1 hour to precipitate insoluble matter. The supernatant was removed by decantation and the precipitate was dried under reduced pressure using a rotating evaporator.

Dry weight (weight c) of the thus-obtained filtration residue was measured, and the yield of the hydrogel component (the proportion of the hydrogel component in a gum arabic) was obtained using the following formula.

**[Formula 4]**

**Content (wt%) of hydrogel component = [Dry weight of filtration residue (Weight c) / Dry weight of gum arabic (Weight a)] x 100**

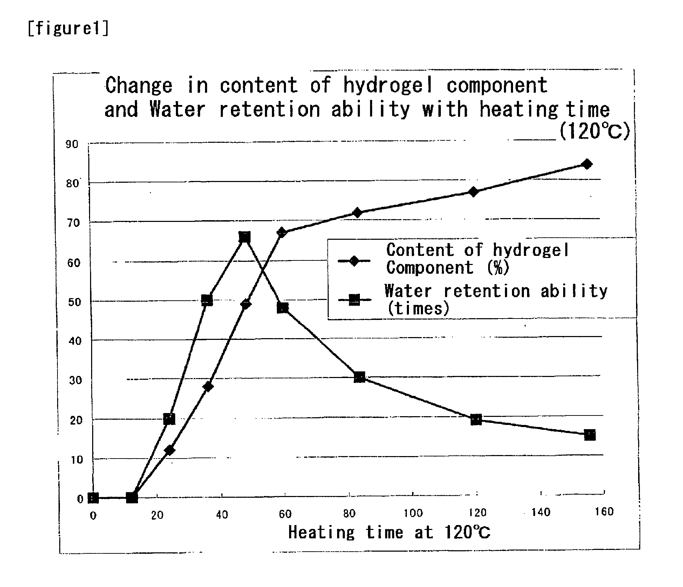

The status of the filtration residue (hydrogel component) left on the above-mentioned 300-mesh wire gauze was observed. Table 1 shows the results together with the above-mentioned water retention ability (times) and the hydrogel component content (wt%). Fig. 1 shows the change in water retention ability (time) and hydrogel component content (wt%) as a graph.

Table 1

| Heating conditions | Content of hydrogel component (wt%) | Water retention ability (times) | Properties of filtration residue (hydrogel) |
|---|---|---|---|
| Unheated | 0 | 0 | Completely water soluble, no hydrogel was formed |
| 120°C, 12 hours | 0 | 0 | Completely water soluble, no hydrogel was formed |
| 120°C, 18 hours | 5 | 0 | Semi-dissolved gel with low viscosity containing very small gel particles |
| 120°C, 24 hours | 12 | 20 | Semi-dissolved somewhat viscous gel containing a relatively large amount water |
| 120°C, 36 hours | 28 | 50 | Very small viscous granular swelling gel particles containing a large amount water |
| 120°C, 48 hours | 49 | 66 | Small viscous granular swelling gel particles containing a large amount water |
| 120°C, 60 hours | 67 | 48 | Small viscous granular swelling gel particles containing a large amount water |
| 120°C, 84 hours | 72 | 30 | Small viscous granular swelling gel particles containing a relatively large amount water |
| 120°C, 120 hours | 77 | 19 | Somewhat solid swelling gel particles having a little viscosity and containing a relatively small amount of water |
| 120°C, 156 hours | 84 | 15 | Somewhat viscous solid swelling gel particles containing a small amount of water |
| 120°C, 240 hours | 92 | 12 | Solid non-viscous swelling gel particles containing a small amount of water (Completely solid) |

From these results, it became clear that about 10 wt% of hydrogel component was generated by heating gum arabic at 120°C for about 20 hours, and the content of the hydrogel component increased as the heating time increased. The water absorbency (water retention ability) of a sample was not less than about 20 times when the content of the hydrogel component in the sample (heated gum arabic) was about 12 to 77 wt% and not less than about 50 times when the content was about 28 to 67 wt%.

In Experimental Example 1, 20 wt% aqueous sample solutions were obtained by dissolving 1 kg of gum arabic heated at 120°C for 12, 18, 24, 36, or 48 hours in 4 kg of water, and removing insoluble matter by centrifugal separation. While agitating 850 g of the 20 wt% aqueous sample solution, 150 g of medium-chain triglycerides (product name: octanoic/decanoic acid triglyceride O.D.O., product of Nisshin OilliO, Ltd.) was added thereto, and the mixture was emulsified using a homogenizer (product of APV Gaulin) (homogenized 4 times at a pressure of 44 MPa (450 kg/cm$^2$)), giving emulsions.

The average particle diameter of the resulting emulsions was measured immediately after emulsification and after 3 days of storage at 60°C using a particle size distribution analyzer (SALD-1100 Laser Diffraction Particle Size Analyzer, product of Shimadzu). Table 2 shows the results together with the content of the hydrogel component (%) and water retention ability (times).

Table 2

| Heating conditions | Content of hydrogel component (wt%) | Water retention ability (times) | Emulsion stability test (Average particle diameter, $\mu$m) | |
|---|---|---|---|---|
| | | | Immediately after preparation | Preserved at 60°C for 3 days |
| Unheated | 0 | 0 | 0.74 | 2.10 |
| 120°C, 12 hours | 0 | 0 | 0.65 | 0.66 |
| 120°C, 18 hours | 5 | 0 | 0.69 | 0.73 |
| 120°C, 24 hours | 12 | 20 | 0.82 | 0.86 |
| 120°C, 36 hours | 28 | 50 | 1.45 | 1.52 |
| 120°C, 48 hours | 49 | 66 | 2.58 | 2.80 |

From Table 2, it became clear that when the content of the hydrogel component increases as the time for heating gum arabic (at 120 °C) is increased, there is a tendency that it becomes more difficult to make the emulsification particles small and the emulsification stability is decreased.

Note that it is known that the emulsifiability of gum arabic is improved by heating. Utilizing this property, methods for obtaining modified gum arabic having a high emulsifiability by heating gum arabic have been proposed. In the above experiment, when gum arabic was heated at 120°C for 12 hours, the emulsifiability and emulsification stability was remarkably improved compared to unheated gum arabic (raw material gum arabic with a content of hydrogel component of 0%). However, when the content of water-insoluble hydrogel component exceeds 10% by heating at 120 °C for more than 20 hours, it became difficult to make the emulsion particles very small and this tended to make the emulsifiability and emulsification stability lower than unheated gum arabic (raw material gum arabic).

Therefore, emulsifiability can be improved only when the content of hydrogel component in gum arabic is 0 %, or, if hydrogel component is generated, the content thereof is less than 10%. In other words, the composition containing the hydrogel component of the present invention wherein the content of hydrogel component is not less than 10 % is clearly different from known modified gum arabic obtained by heating as a material in terms of hydrogel component content and properties attributable to such a content (emulsifiability).

Experimental Example 2

A spray-dried powder (average particle diameter 80 $\mu$m, 1000 kg) obtained by spray-drying an aqueous gum arabic (*Acacia senegal*) solution was placed in a 2000 L Nauta mixer equipped with a decompression unit (vacuum-type Nauta mixer NXV, product of Hosokawamicron Corporation), heated at 100 °C for 5 hours under the vacuum condition, and, after removal of moisture, heated at 130 °C for 20 hours, 40 hours, or 80 hours. The heated samples were then cooled.

Ten equivalents of water (1 kg) was added to 100 g of one of each of the gum arabic samples (heated sample) or unheated gum arabic samples used as a raw material for heated samples while agitating. The time (seconds) required for each gum arabic sample to completely absorb the water (10 times its weight) ("water-absorption speed") was measured, and the status of each sample when it had absorbed 10 times its weight of water was checked. As with Experimental Example 1, with regard to each gum arabic sample (heated sample) and unheated gum arabic sample (unheated sample), the content of the hydrogel component (%) and water retention ability (times) were evaluated. Table 3 shows the results.

Table 3

| Heating conditions | Content of hydrogel component (wt%) | Water retention ability (times) | Water-absorption speed: time required to absorb 10 times weight of water (seconds) | Status of samples after absorbing 10 times weight of water |
|---|---|---|---|---|
| Unheated | 0 | 0 | -* | Solution-like status |
| 130°C, 20 hours | 50 | 65 | 65 | Even water was added, did not absorb water well until sufficiently mixed. After mixing, became thick gel without being solidified. |
| 130°C, 40 hours | 79 | 24 | 10 | Absorbed water immediate upon addition, but water-absorption speed was relatively slow and the solidified gels were somewhat soft. |
| 130°C, 80 hours | 91 | 20 | 5 | Absorbed water immediate upon addition. Rapidly solidified and formed hard gel. |
| Note: - indicates no absorption of water was observed due to the solution-like status | | | | |

Examples 1 and 2

Mayonnaises comprising the ingredients indicated in Table 4 were prepared. In the Table, a spray-dried powder (average particle diameter of 80 μm) obtained by spray-drying an aqueous gum arabic (_Acacia senegal_) solution was used as unheated gum arabic. Samples obtained by heating the above-mentioned spray-dried powder in an oven at 120°C for 36 hours or 60 hours and dried in the same manner as in Experimental Example 1 were used respectively as the compositions containing the hydrogel component 1 and 2.

Specifically, each mayonnaise was prepared by following the method below.

<Preparation method>

In Examples 1 and 2, the composition containing the hydrogel component 1 or 2 was added to ion-exchanged water, while in Comparative Example 1, unheated gum arabic was added to ion-exchanged water. Each mixture was subjected to dissolution by heating at 80 °C for 10 minutes while agitating, and then cooled to 40 °C. Fermented vinegar, sugar, salt and sodium L-glutamate were added to the resultants (in the case of Control (ordinary product sample), to ion-exchanged water), and mixed by agitation. Subsequently, egg yolks were added thereto and mixed homogeneously. While agitating, salad oil was gradually added thereto dropwise and emulsified using a colloid mill (slit width; 0.2 mm, number of rotations; 3000-6000 rpm), giving mayonnaises.

Table 4

| | Control (Ordinary) | Example 1 | Example 2 | Comparative Example 1 (wt%) |
|---|---|---|---|---|
| Salad oil | 70 | 30 | 30 | 30 |
| Egg yolk | 10 | 10 | 10 | 10 |

(continued)

| | Control (Ordinary) | Example 1 | Example 2 | Comparative Example 1 |
|---|---|---|---|---|
| | | | | (wt%) |
| Fermented vinegar | 8 | 8 | 8 | 8 |
| Sugar, | 2 | 2 | 2 | 2 |
| Salt | 2 | 2 | 2 | 2 |
| Sodium L-glutamate | 0.3 | 0.3 | 0.3 | 0.3 |
| Unheated gum arabic | - | - | - | 5 |
| Hydrogel component 1 | - | 5 | - | - |
| Hydrogel component 2 | - | - | 5 | - |
| Ion-exchanged water | Balance | Balance | Balance | Balance |
| Total | 100.0 | 100.0 | 100.0 | 100.0 |
| Calorific content/100 g | 693 | 325 | 325 | 325 |

(1) Appearance property (emulsification) and texture

The appearances of the thus-obtained mayonnaises (Control, Example1, Example 2, and Comparative Example 1) were evaluated with the naked eye, and their viscosities were measured under the following conditions. Six well-trained panelists were asked to eat each mayonnaise and evaluate its texture. Table 5 shows the results.

<Conditions for measuring viscosity>

Measuring equipment: BROOKFIELD viscosimeter LVDV-II type
Rotor: T-F spindle
Rotation speed: 5 rpm.
Temperature of good: 25 °C.

Table 5

| | Viscosity (mPs·s) | Appearance | Texture |
|---|---|---|---|
| Control | 32000 | Yellowish appearance, viscous, no separation of oil layer, no graininess was observed on the surface | Smooth texture with natural body feeling and richness, smooth melting texture without graininess |
| Example 1 | 37000 | Same appearance as Control, no separation of the oil layer | Smooth texture with natural body feeling and richness, smooth melting texture without graininess |
| Example 2 | 66000 | Same appearance as Control, no separation of the oil layer | Smooth texture with natural body feeling and richness, smooth melting texture without graininess |
| Comparative Example 1 | 8250 | Separation of oil layer and water syneresis were observed | Lack of natural body feeling and richness, watery and weak taste |

As is clear from the above results, the mayonnaise of Comparative Example 1, which was prepared by using unheated gum arabic (unheated sample) for substituting the reduced portion of the salad oil, not only had insufficient emulsification so that the oil layer separated from the water layer but also did not have natural body feeling and had a watery and weak texture. In contrast, the mayonnaises of Examples 1 and 2, prepared by using the composition containing the hydrogel component for substituting the reduced portion of salad oil, had the same appearance and texture as normal mayonnaise (Control) prepared by using an ordinary amount of salad oil.

(2) Freeze resistance

Each mayonnaise (Control, Example 1, Example 2, and Comparative Example 1) prepared above was stored in a freezer (-20°C) for 3 days, unfrozen at room temperature, and the appearance was visually checked. Table 6 shows the results.

Table 6

| | Appearance |
|---|---|
| Control | Oil layer had completely separated and water syneresis was observed. |
| Example 1 | No problem in appearance |
| Example 2 | No problem in appearance |
| Comparative Example 1 | Oil layer had completely separated and water syneresis was observed. |

As is clear from these results, since the oil layer separates from the water layer, ordinary mayonnaise (Control) cannot be used for frozen foods, etc. However, in the mayonnaises of Examples 1 and 2 prepared by using the composition containing the hydrogel component for substituting the reduced portion of salad oil, the emulsified state was maintained without separation of the oil layer even when frozen. Mayonnaises free from deterioration of properties due to freezing and unfreezing were thus obtained. This indicates that the mayonnaises of Examples 1 and 2 can be used for frozen foods.

Example 3 Margarine

Margarines containing the ingredients as indicated in Table 7 were prepared. In the Table, a spray-dried powder (average particle diameter of 80 $\mu$m) obtained by spray-drying an aqueous gum arabic (*Acacia* senegal) solution was used as unheated gum arabic. A sample obtained by heating the above-mentioned spray-dried powder in an oven at 120°C for 96 hours and dried in the same manner as in Experimental Example 1 was used as the composition containing the hydrogel component 3.
Specifically, each margarine was prepared by following the method below.

<Preparation method>

An emulsifier (product name: Excel PI-143, product of Kao Corp.) was added to a mixture of coconut hardened oil and refined coconut oil (lanolin-based fats and/or oils: RCO, product of Kao Corp.), and dissolved while heating to 70°C (fats and/or oils containing composition). In a separate step, salt and skim, milk powder were added to ion-exchanged water. With respect to Example 3, the composition containing the hydrogel component 3 was further added, and with respect to Comparative Example 2, unheated gum arabic was added and dissolved while heating to 70 °C. A fat-containing composition prepared beforehand was added to the resultant dissolution and emulsified while agitating using a Tk homomixer (product of Tokushu Kika Kogyo Co., Ltd.) at 5000 rpm for 5 minutes. Subsequently, the margarine was prepared by agitating the emulsion while cooling.

Table 7

| | Control | Example 3 | Comparative Example 2 |
|---|---|---|---|
| | | | (Unit: % by weight) |
| Coconut hardened oil (melting point: 34°C) | 50 | 25 | 25 |
| Refined coconut oil (RCO, product of Kao Corp.) | 35 | 17.5 | 17.5 |
| Salt | 1 | 1 | 1 |
| Skim milk powder | 0.6 | 0.6 | 0.6 |
| Emulsifier (Excel PI-143, product of Kao Corp.) | 0.4 | 0.4 | 0.4 |
| Unheated gum arabic | - | - | 5 |
| Composition containing hydrogel component 3 | - | 5 | - |

(continued)

| | Control | Example 3 | Comparative Example 2 |
|---|---|---|---|
| | | | (Unit: % by weight) |
| Ion-exchanged water | 13 | 50.5 | 50.5 |
| Total | 100 | 100 | 100 |

(1) Appearance properties (emulsification) and texture

Each margarine thus obtained (Control, Example 3, and Comparative Example 2) was placed in a tube with screw, put in a 35°C thermostat and allowed to stand for 24 hours, and its appearance was then evaluated with the naked eye. Six well-trained panelists were asked to eat each margarine and evaluate its texture. Table 8 shows the results.

Table 8

| | Status after preservation at 35°C for 24 hours | Texture |
|---|---|---|
| Control | No great separation observed | Smooth texture |
| Example 3 | No great separation observed | Smooth texture |
| Comparative Example 2 | Oil layer and water layer were completely separated | -* |
| *Note: - indicates that texture was not evaluated because of separation of oil layer and syneresis | | |

As is clear from the above results, the margarine of Comparative Example 2, which was prepared by using unheated gum arabic (unheated sample) for substituting the reduced portion of coconut hardened oil and refined coconut oil (RCO), was insufficiently emulsified and a margarine could not be obtained because the oil layer completely separated from the water layer. In contrast, the margarine of Example 3, which was prepared by using a composition containing the hydrogel component for substituting the reduced portion of coconut hardened oil and refined coconut oil (RCO), had the same appearance and texture as ordinary margarine (Control) prepared by using ordinary amount of coconut hardened oil and refined coconut oil (RCO).

Example 4: Disposable diaper

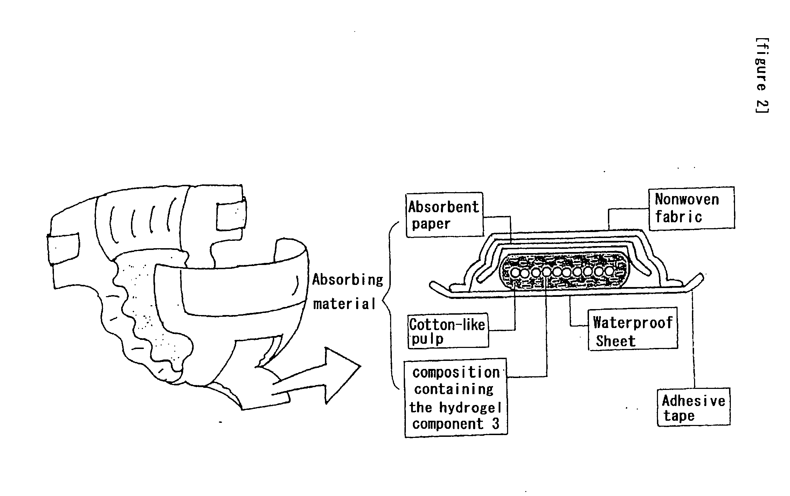

Using a composition containing the composition containing the hydrogel component 3 obtained by subjecting a spray-dried powder of gum arabic (*Acacia senegal*) to heating in an oven at 120°C for 96 hours and drying in the same manner as in Experimental Example 1, disposable diapers were produced by the method below (see Fig. 2).

<Disposable diaper production method>

A waterproof sheet made of liquid-impermeable polyethylene was placed as the lowermost layer, and adhesive tapes were attached to the ends of the waterproof sheet. On the waterproof sheet was placed 5 g of cotton-like pulp (Comparative Example), or cotton-like pulp (5 g) containing the composition containing the hydrogel component 3 (5 g) therein (Example 4). Absorbent paper consisting of pulp was placed thereon, and a top sheet consisting of fluid-permeable nonwoven fabric was placed on top thereof. A waterproof sheet, cotton-like pulp, absorbent paper, and a nonwoven fabric were connected with the tape, and the disposable diaper was thus assembled.

Onto the thus-prepared disposable diaper was dripped 50 ml of 0.9 % aqueous NaCl solution (normal saline) on the laminated portion of the diaper (waterproof sheet, cotton-like pulp, absorbent paper, and a nonwoven fabric) from above the nonwoven fabric. Leakage was observed in the disposable diaper (Comparative Example) wherein only 5 g of cotton-like pulp but not the composition containing the hydrogel component 3 was used as an interior absorption material. In contrast, the disposable diaper (Example 4) using the mixture of 5 g of the composition containing the hydrogel component 3 and 5 g of cotton-like pulp as an interior absorption material quickly absorbed the liquid, no leakage was observed, and exhibited excellent liquid absorptivity.

**Claims**

**1.** A composition containing a hydrogel component derived from gum arabic, the composition containing at least 10 wt% of the hydrogel component.

2. A composition containing the hydrogel component according to claim 1, wherein the composition is obtained by heating gum arabic.

3. A composition containing the hydrogel component according to claim 1, wherein the composition contains 10 to 80 wt% of the hydrogel component.

4. An alternative for edible oil comprising the composition containing the hydrogel component of claim 3 and water.

5. A food product containing the alternative for edible oil of claim 4.

6. A food product according to claim 5, which is a low-calorific content food product prepared by using the alternative for edible oil of claim 4 instead of all or a part of an edible oil ordinarily used in preparing a food product containing edible oil as an ingredient.

7. A food product according to claim 6, wherein the food product containing an edible oil is selected from mayonnaise, salad dressing, tartar sauce, white sauce, demi-glace sauce, curry, stew, corn soup, potage, or clam chowder.

8. Use of the composition containing the hydrogel component of claim 3 and water for preparing an alternative for edible oil.

9. A method for preparing a low-calorific content food product using the alternative for edible oil of claim 4 instead of all or a part of an edible oil ordinarily used in preparing a food product containing an edible oil as an ingredient.

10. A composition containing the hydrogel component according to claim 1, wherein the composition contains 40-90 wt% of the hydrogel component.

11. An alternative for edible fat containing the composition containing the hydrogel component of claim 10 and water.

12. A food product containing the alternative for edible fat of claim 11.

13. A food product according to claim 12, which is a low-calorific content food product prepared by using the alternative for edible fat of claim 11 instead of all or a part of an edible fat ordinarily used in preparing a food product containing edible fat as an ingredient.

14. A food product according to claim 13, wherein the food product ordinarily containing an edible fat as an ingredient is selected from ice cream, soft ice cream, margarine, butter, ham, sausage, hamburg steak, meatball, whipped cream, cheese, coffee whitener, white sauce, demi-glace sauce, curry, stew, corn soup, potage, or clam chowder.

15. Use of the composition containing the hydrogel component of claim 10 and water for preparing an alternative for edible fat.

16. A method for preparing a low-calorific content food product using the alternative for edible fat of claim 11 instead of all or a part of an edible fat ordinarily used in preparing a food product containing an edible fat as an ingredient.

17. A composition containing the hydrogel component according to claim 1, wherein the composition contains at least 20 wt% of the hydrogel component.

18. A water retention material consisting of the composition containing the hydrogel component of claim 17 or comprising the composition and water.

19. A water retention product containing the water retention material of claim 18.

20. A composition containing the hydrogel component according to claim 1, wherein the composition contains at least 75 wt% of the hydrogel component.

21. A water absorbent material comprising the composition containing the hydrogel component of claim 20 as an active ingredient.

22. A water absorbent product comprising the water absorbent material of claim 21.

[figure1]

Change in content of hydrogel component and Water retention ability with heating time (120°C)

Heating time at 120°C

Content of hydrogel Component (%)

Water retention ability (times)

[figure 2]

Nonwoven fabric

Waterproof Sheet

Adhesive tape

Absorbent paper

Cotton-like pulp

composition containing the hydrogel component 3

Absorbing material

## INTERNATIONAL SEARCH REPORT

| International application No. |
|---|
| PCT/JP2005/013510 |

A. CLASSIFICATION OF SUBJECT MATTER
*C08L5/00* (2006.01), *A23D7/015* (2006.01), *A23L1/05* (2006.01), *A23L1/24* (2006.01), *A23L1/307* (2006.01), *A23L1/31* (2006.01), *C09K3/00* (2006.01)

According to International Patent Classification (IPC) or to both national classification and IPC

B. FIELDS SEARCHED

Minimum documentation searched (classification system followed by classification symbols)
*C08L5/00* (2006.01), *A23D7/015* (2006.01), *A23L1/05* (2006.01), *A23L1/24* (2006.01), *A23L1/307* (2006.01), *A23L1/31* (2006.01), *C09K3/00* (2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2001-46487 A (Kuraray Co., Ltd.),<br>20 February, 2001 (20.02.01),<br>Claims; Par. Nos. [0034] to [0035], [0037],<br>[0046]<br>(Family: none) | 1-3,10,17-22<br>2,4-9,11-16 |
| X<br>A | JP 5-308930 A (Nippon Kabaito Kogyo Kabushiki<br>Kaisha),<br>22 November, 1993 (22.11.93),<br>Claims; Par. Nos. [0007], [0012] to [0021];<br>Figs. 1, 2<br>(Family: none) | 1,3,10,17,20<br>2,4-9,11-16,<br>18-19,21-22 |
| P,X<br>P,A | JP 2005-18515 A (The Japan Carlit Co., Ltd.),<br>20 January, 2005 (20.01.05),<br>Claims; Par. Nos. [0016] to [0017]<br>(Family: none) | 1,3,10,17,20<br>2,4-9,11-16,<br>18-19,21-22 |

[X] Further documents are listed in the continuation of Box C.    [ ] See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>12 October, 2005 (12.10.05) | Date of mailing of the international search report<br>25 October, 2005 (25.10.05) |
|---|---|
| Name and mailing address of the ISA/<br>Japanese Patent Office | Authorized officer |
| Facsimile No. | Telephone No. |

Form PCT/ISA/210 (second sheet) (April 2005)

| INTERNATIONAL SEARCH REPORT | International application No. |
|---|---|
| | PCT/JP2005/013510 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 6-86644 A  (FUISZ TECHNOLOGIES LTD.),<br>29 March, 1994 (29.03.94),<br>Claims<br>& EP 722670 A1          & EP 561734 A1<br>& US 5236734 A | 1-22 |
| A | JP 6-506104 A  (Opta Food Ingredients,Inc.),<br>14 July, 1994 (14.07.94),<br>Claims<br>& WO 1992/003937 A1     & US 5137743 A<br>& EP 547147 A1 | 1-22 |
| A | JP 2002-285019 A  (Shiseido Co., Ltd.),<br>03 October, 2002 (03.10.02),<br>Claims<br>& WO 2002/051939 A1 | 1-22 |

Form PCT/ISA/210 (continuation of second sheet) (April 2005)

## REFERENCES CITED IN THE DESCRIPTION

**Patent documents cited in the description**

- JP 5252906 A
- JP 2001218550 A
- JP 6141820 A
- JP 60031511 A
- JP 56076419 A
- JP 56005137 A

**Non-patent literature cited in the description**

- Industrial Gums, Polysaccharides and their Derivatives. Academic Press, 1973, 197-263
- **TAKAO FUSHIMI.** Collection of ideas for development and application of highly water-absorbing polymers. Kogyo Chosakai Publishing Co., Ltd, 1990